# EUROPÄISCHE PATENTSCHRIFT

(11) **EP 3 427 005 B1**
(45) Veröffentlichungstag und Bekanntmachung des Hinweises auf die Patenterteilung: **15.05.2019**
(21) Anmeldenummer: 17739211.5
(22) Anmeldetag: 28.06.2017
(51) Int. Cl.: G01B 11/06, G06T 7/00

(54) **VERFAHREN ZUR VOLLSTÄNDIGKEITSPRÜFUNG**
METHOD FOR CHECKING FOR COMPLETENESS
PROCÉDÉ DE CONTRÔLE DU REMPLISSAGE

(30) Priorität: 15.08.2016 DE 102016215144
(43) Veröffentlichungstag der Anmeldung: 16.01.2019
(73) Patentinhaber: IFM Electronic GmbH, 45128 Essen (DE)
(72) Erfinder: KOHLMANN, Klaus, 88213 Ravensburg (DE); MASSANELL, Javier, 88677 Markdorf (DE); GONSCHIOR, Mike, 58313 Herdecke (DE)
(86) Internationale Anmeldenummer: PCT/EP2017/066009
(87) Internationale Veröffentlichungsnummer: WO 2018/033285

(56) Entgegenhaltungen:
- DE-A1- 4 000 658
- DE-A1- 19 753 333
- DE-A1-102010 021 851
- US-A1- 2013 177 250
- US-A1- 2013 215 259

## Beschreibung

Die Erfindung betrifft ein Verfahren zur Vollständigkeitsprüfung eines mit einer Mehrzahl von Objekten versehenen Behälters mit Hilfe einer 3D-Kamera, die ein dreidimensionales Bild der Objekte und vorzugsweise auch des Behälters liefert, und einer Multi-ROI, wobei die Multi-ROI eine Mehrzahl von ROIs umfasst, die eine von einem Nutzer einstellbare Form aufweisen sowie innerhalb der Multi-ROI in einer von einem Nutzer einstellbaren Anzahl von Zeilen, Spalten und Rasterart angeordnet sind, mit einem Lernmodus und einem zeitlichen nachfolgenden Arbeitsmodus.

Damit befasst sich die vorliegende Erfindung mit dem Lösen von Vollständigkeitsaufgaben. Typische Anwendungsfälle sind die Überprüfung, ob alle Flaschen in einer Kiste sind, die Überprüfung, ob ein Milchkarton mit allen Milchpaketen befüllt ist, oder die Überprüfung ist, ob alle Joghurtbecher innerhalb einer Verpackung vorhanden sind. Eine derartige Überprüfung erfolgt mit Hilfe einer 3D-Kamera, die ein dreidimensionales Bild des Behälters mit den darin enthaltenen Objekten liefert. Diese Bilddaten können derart ausgewertet werden, dass in einem automatisierten Verfahren überprüft werden kann, ob alle vorgesehenen Objekte in dem Behälter tatsächlich auch vorhanden sind.

Bei derartigen optischen Verfahren wird häufig mit Hilfe von ROIs (Regions of Interest) gearbeitet. Eine ROI wird von einem geschlossenen geometrischen Element, wie einem Kreis oder Quadrat, gebildet. Die "Region of Interest" ist dann der Bereich innerhalb des geschlossenen geometrischen Elements, also z.B. innerhalb des Kreises bzw. des Quadrates. Die Benutzung von ROIs erfolgt, um eine optische Auswertung nur in einem bestimmten erfassten Gebiet vorzunehmen, typischerweise in dem Gebiet, in dem ein Objekt erwartet wird. Dabei können mehrere ROIs zu einer Multi-ROI zusammengefasst werden, so dass eine Multi-ROI in der Regel eine vorbestimmte Anzahl von ROIs aufweist, die beispielsweise in einer jeweils vorbestimmten Anzahl von Spalten und Zeilen angeordnet sind.

Aus der US 2013/0177250 A1 ist beispielhaft eine Vorrichtung zur Bildverarbeitung bekannt, bei der mit Hilfe einer 2D-Kamera Objekte auf Vollständigkeit überwacht werden. Hierzu wird das Objekt mit einem hinterlegten Referenzobjekt verglichen.

Aus der US 2013/0215259 A1 ist ferner ein Verfahren zur Überwachung des Füllzustands einer Zigarettenpackung bekannt, bei dem die korrekte Füllung einer Packung anhand von Farb- und Formmerkmalen ermittelt wird.

Ebenso beschäftigt sich die DE 40 00 658 A1 mit eine Prüfsystem für die Enden von Zigarettengruppe für eine Verpackungsmaschine. Mit Hilfe von zwei Fernsehkameras werden die Endflächen mit vorbestimmten Werten verglichen, wobei bei einer Abweichung die fehlerhaften Zigaretten ausgeschieden werden.

Die DE 197 53 333 A1 beschäftigt sich mit einer weiteren Anwendung im Hinblick auf die Kontrolle der Vollzähligkeit von Zigarettengruppen. Hierzu wird im Stirnseitenbereich der Zigarettengruppe das Intensitätssignal einer CCD-Kamera auf den Stirnseiten und deren Zwischenräumen gemessen und ausgewertet.

Aus der DE 10 2010 021 851 A1 ist ferner ein System zur Beladung von Sammelverpackungen bekannt, bei dem ein optischer Sensor die Vollständigkeit der Verpackungen erfasst. Hierzu ist eine optische Abtastung vorgesehen, die ein Höhenprofil der Verpackungen ermittelt und bei Abweichungen von einem Sollwert eine Warnung oder ein Stopp-Signal erzeugt.

Bei der Verwendung einer 3D-Kamera steht das erfasste Bild typischerweise als dreidimensionale Pixel-Matrix zur Verfügung, wobei die Pixel-Matrix in einer Dimension Abstandswerte der erfassten Objekte zur 3D-Kamera und in den beiden anderen Dimensionen Ortswerte in jeweiligen Ebenen senkrecht dazu enthält. Auf diese Weise kann jeder ROI innerhalb der Multi-ROI ein Abstandswert zugeordnet werden. Ist das erwartete Objekt tatsächlich vorhanden, wird der Abstandswert zwischen Objekt und 3D-Kamera geringer sein als in dem Fall, in dem das Objekt fehlt. Auf diese Weise können Grenzwerte dafür definiert werden, dass ein Objekt als vorhanden bzw. nicht vorhanden erfasst wird. Insgesamt kann damit geprüft werden, ob der Behälter vollständig mit Objekten gefüllt ist.

Bei derartigen aus der Praxis bekannten Verfahren stellt sich das Problem, dass die Einstellung dieser Grenzwerte mitunter aufwändig und wenig nutzerfreundlich ist.

Daher ist es die Aufgabe der Erfindung, ein derartiges Verfahren zur Vollständigkeitsprüfung anzugeben, das einfach einrichtbar ist.

Diese Aufgabe ist durch den Gegenstand des Patentanspruchs 1 gelöst. Bevorzugte Weiterbildungen der Erfindung sind in den Unteransprüchen beschrieben.

Erfindungsgemäß vorgesehen ist damit ein Verfahren zur Vollständigkeitsprüfung eines mit einer Mehrzahl von Objekten versehenen Behälters mit Hilfe einer 3D-Kamera, die ein dreidimensionales Bild der Objekte liefert, und einer Multi-ROI, wobei die Multi-ROI eine Mehrzahl von ROIs umfasst, die eine von einem Nutzer einstellbare Form aufweisen sowie innerhalb der Multi-ROI in einer von einem Nutzer einstellbaren Anzahl von Zeilen, Spalten und Rasterart angeordnet sind, mit einem Lernmodus und einem zeitlich nachfolgenden Arbeitsmodus, wobei der Lernmodus folgende Schritte aufweist:
Erfassen eines Bildes der Objekte in Form einer dreidimensionalen Pixel-Matrix mittels der 3D-Kamera, wobei die Pixel-Matrix in einer Dimension Abstandswerte der erfassten Objekte zur 3D-Kamera und in den beiden anderen Dimensionen Ortswerte in jeweiligen Ebenen senkrecht dazu enthält,
Wiedergeben des erfassten Bildes als zweidimensionales Bild mit den Ortswerten in einem ersten Bildbereich,
Anzeigen von Eingabefeldern für die Form bzw. die Anzahl der Zeilen, Spalten und Rasterart der ROIs,
Anzeigen einer zweidimensionalen Multi-ROI mit einer von dem Nutzer eingegebenen Anzahl von Zeilen, Spalten und Rasterart der ROIs und einer von dem Nutzer eingegebenen Form der ROIs in dem ersten Bildbereich,
Anpassen der Größe, der Position und der Verdrehung der Multi-ROI auf wenigstens eine Eingabe des Nutzers hin,
Anpassen der Größe der ROIs auf wenigstens eine Eingabe des Nutzers hin,
Anzeigen von von den Abstandswerten abgeleiteten Höhenwerten für jedes ROI in einem zweiten Bildbereich, der von dem ersten Bildbereich verschieden ist,
Anzeigen einer unteren Grenze oder/und einer oberen Grenze für die Höhenwerte in dem zweiten Bildbereich,
Anpassen der unteren Grenze oder/und der oberen Grenze für die Höhenwerte auf wenigstens eine Eingabe des Benutzers hin, und
Wechseln in den Arbeitsmodus, wobei der Arbeitsmodus folgenden Schritt aufweist:
   Anzeigen eines Zustands einer jeweiligen ROI, wobei der Zustand der jeweiligen ROI einer der Zustände "Überfüllung" oder/und "Unterfüllung" und "Gut" ist und wobei der Zustand "Überfüllung" angezeigt wird, wenn der Höhenwert der jeweiligen ROI über der oberen Grenze liegt, der Zustand "Unterfüllung" angezeigt wird, wenn der Höhenwert der jeweiligen ROI unter der unteren Grenze liegt, und der Zustand "Gut" angezeigt wird, wenn der Höhenwert nicht außerhalb einer vorgesehenen Grenze liegt.

Es ist somit ein maßgeblicher Aspekt der Erfindung, dass eine Anzeige, vorzugsweise auf einem Bildschirm, in zwei voneinander verschiedenen Bildbereichen erfolgt. Im ersten Bildbereich wird das erfasste Bild der Objekte als zweidimensionales Bild wiedergegeben. Außerdem wird in dem ersten Bildbereich die zweidimensionale Multi-ROI angezeigt, die dort von einem Nutzer durch entsprechende Eingaben hinsichtlich ihrer Größe, Position und Verdrehung sowie hinsichtlich der Größe der ROIs angepasst werden kann. In dem zweiten Bildbereich, der von dem ersten Bildbereich verschieden ist, werden von den erfassten Abstandswerten abgeleitete Höhenwerte für jedes ROI angezeigt, und zwar zusammen mit einer unteren Grenze oder/und einer oberen Grenze für die Höhenwerte, wobei diese Grenzen von dem Nutzer einstellbar sind. Damit wird dem Nutzer insgesamt eine graphische Benutzeroberfläche zur Verfügung gestellt, die auf einfache Weise, nämlich vollständig visualisiert, die Möglichkeit der Einrichtung der Vollständigkeitsprüfung ermöglicht.

In dem dem Arbeitsmodus nachfolgenden Lernmodus wird dann der Zustands einer jeweiligen ROI angezeigt, wobei der Zustand der jeweiligen ROI wenigstens zwei Zustände annehmen kann, nämlich einerseits "Gut" und andererseits "Überfüllung" oder/und "Unterfüllung". Ist nur eine obere Grenze oder eine untere Grenze definiert, kann der Zustand der jeweiligen ROI also genau zwei Zustände annehmen, nämlich einerseits "Gut" und andererseits "Überfüllung" oder "Unterfüllung". Bei der Definition einer unteren Grenze sowie einer oberen Grenze kann der Zustand der jeweiligen ROI drei Zustände annehmen, nämlich "Gut", "Überfüllung" und "Unterfüllung". Der Zustand "Gut" wird im Übrigen immer dann angezeigt, wenn der Höhenwert der jeweiligen ROI nicht außerhalb einer definierten Grenzen liegt, also, sofern jeweils vorgesehen, nicht oberhalb der oberen Grenze und nicht unterhalb der unteren Grenze.

Grundsätzlich gibt es unterschiedliche Möglichkeiten, die von den Abstandswerten abgeleiteten Höhenwerte für jedes ROI anzuzeigen. So ist zum Beispiel die Anzeige in Form von numerischen Werten möglich. Gemäß einer bevorzugten Weiterbildung der Erfindung ist jedoch vorgesehen, dass die von den Abstandswerten abgeleiteten Höhenwerte für jedes ROI in dem zweiten Bildbereich als Strecken mit dem jeweiligen Höhenwert entsprechenden Längen angezeigt werden. Dies macht die Visualisierung, ob sich ein jeweiliges Objekt an seinem vorgesehenen Platz im Behälter befindet, für den Nutzer besonders einfach und nachvollziehbar.

In diesem Zusammenhang kann auch für die Darstellung der unteren Grenze oder/und der oberen Grenze für die Höhenwerte eine numerische Anzeige vorgesehen sein, die von dem Nutzer einstellbar ist. Gemäß einer bevorzugten Weiterbildung der Erfindung werden die untere Grenze oder/und die obere Grenze für die Höhenwerte jeweils als vorzugsweise senkrecht zu den die jeweiligen Höhenwerte angebenden Strecken verlaufenden Grenzlinien angezeigt. Auf diese Weise kann der Nutzer des Verfahrens direkt erkennen, ob der jeweilige Höhenwert in einer entsprechenden ROI relativ zu der oberen bzw. unteren Grenze liegt. Dies macht die Einstellung der unteren bzw. der oberen Grenze als Schaltpunkt für die Erfassung eines bestimmten Zustands des ROI besonders einfach und verlässlich.

Schließlich ist in diesem Zusammenhang vorzugsweise vorgesehen, dass die Grenzlinien von dem Nutzer mittels eines Cursors verschiebbar sind. Dieser Cursor kann z.B. mittels einer Maus bewegbar sein. Alternativ dazu kann ein Touch-Display vorgesehen sein, so dass die Grenzlinien mittels einer Fingergeste verschiebbar sind. Im Vergleich mit der Eingabe von Zahlenwerten ist die Verschiebung der Grenzlinien mittels eines Cursors bzw. mittels einer Fingergeste wesentlich intuitiver, insbesondere da auf diese Weise direkt relativ zu den angezeigten Höhenwerten gearbeitet werden kann.

Beim Wiedergeben des erfassten Bildes als zweidimensionales Bild mit den Ortswerten in dem ersten Bildbereich kann grundsätzlich auf die Wiedergabe von Abstandsdaten verzichtet werden. Vorzugsweise ist jedoch vorgesehen, dass im Lernmodus beim Wiedergeben des erfassten Bildes als zweidimensionales Bild mit den Ortswerten in dem ersten Bildbereich die Abstandsdaten kodiert als Farben angezeigt werden, wobei verschiedene Farben auf verschiedene Abstände hindeuten, z.B. die Farbe "rot" einen geringeren Abstand angibt als die Farbei "blau".

Grundsätzlich müssen die Zeilen und Spalten der Multi-ROI nicht alle gleich breit sein, so dass unterschiedliche Zeilenbreiten und unterschiedliche Spaltenbreiten vorgesehen sein können. Gemäß einer bevorzugten Weiterbildung der Erfindung ist jedoch vorgesehen, dass im Lernmodus die zweidimensionale Multi-ROI auf der Grundlage der von dem Nutzer angegebenen Anzahl von Zeilen und Spalten automatisch derart erstellt wird, dass alle Zeilen dieselbe Zeilenbreite und alle Spalten dieselbe Spaltenbreite aufweisen. Gemäß einer bevorzugten Weiterbildung der Erfindung ist ferner vorgesehen, dass die Größe, die Position oder/und die Verdrehung der Multi-ROI oder/und die Größe der ROIs von dem Nutzer mittels eines Cursors oder mittels einer Fingergeste einstellbar sind. Weiterhin ist vorzugsweise vorgesehen, dass die Form der ROIs für alle ROIs dieselbe ist.

Für die Vollständigkeitsprüfung ist es grundsätzlich ausreichend, wenn nur ein Bild der Objekte erfasst und wiedergegeben wird. Gemäß einer bevorzugten Weiterbildung der Erfindung wird jedoch auch ein Bild des Behälters erfasst und wiedergegeben. Insbesondere im Lernmodus ist dies insofern hilfreich, als dass auf diese Weise die Einstellung von Größe, Position und Verdrehung der Multi-ROI erleichtert wird, nämlich durch die Darstellung der äußeren Begrenzung des Behälters unterstützt werden kann.

Im Arbeitsmodus können die Zustände der jeweiligen ROIs auf unterschiedliche Weisen angezeigt werden. Vorzugsweise ist dabei vorgesehen, dass die Zustände der jeweiligen ROIs im Arbeitsmodus in dem ersten Bildbereich kodiert als Farben oder Grauwerte angezeigt werden. Dies ist damit eine ähnliche Darstellung, wie sie bereits im Lernmodus für die Höhenwerte vorgesehen sein kann. Alternativ oder zusätzlich dazu ist gemäß einer bevorzugten Weiterbildung vorgesehen, im Arbeitsmodus die Zustände der jeweiligen ROIs in einem von dem ersten Bildbereich verschiedenen Bildbereich anzuzeigen, vorzugsweise in Form einer Liste. Insbesondere kann diese Liste farblich unterlegt sein, so dass z.B. der Zustand "Gut" grün unterlegt ist, während die Zustände "Überfüllung" und "Unterfüllung" rot hinterlegt sind. Dies erleichtert die schnelle Erfassung von unzulässigen Zuständen und gleichzeitig die Feststellung, welches Objekt diesen unzulässigen Zustand ausgelöst hat. Schließlich kann neben den Zuständen "Überfüllung", "Unterfüllung" und "Gut" auch ein Zustand "Ungültig" vorgesehen sein, der dann zu tragen kommt, wenn keine verlässlichen Bilddaten erfasst werden konnten.

Nachfolgend wird die Erfindung unter Bezugnahme auf die Zeichnungen anhand eines bevorzugten Ausführungsbeispiels weiter im Detail erläutert.

In den Zeichnungen zeigen
- Fig. 1: schematisch den Aufbau zur Durchführung eines Verfahrens zur Vollständigkeitsprüfung gemäß einem bevorzugten Ausführungsbeispiel der Erfindung,
- Fig. 2: eine Bildschirmdarstellung für das Verfahren zur Vollständigkeitsprüfung gemäß dem bevorzugten Ausführungsbeispiel der Erfindung in einem ersten Verfahrensschritt,
- Fig. 3: eine Bildschirmdarstellung für das Verfahren zur Vollständigkeitsprüfung gemäß dem bevorzugten Ausführungsbeispiel der Erfindung in einem weiteren Verfahrensschritt,
- Fig. 4: eine Bildschirmdarstellung für das Verfahren zur Vollständigkeitsprüfung gemäß dem bevorzugten Ausführungsbeispiel der Erfindung in einem weiteren Verfahrensschritt,
- Fig. 5: eine Bildschirmdarstellung für das Verfahren zur Vollständigkeitsprüfung gemäß dem bevorzugten Ausführungsbeispiel der Erfindung in einem weiteren Verfahrensschritt,
- Fig. 6: eine Bildschirmdarstellung für das Verfahren zur Vollständigkeitsprüfung gemäß dem bevorzugten Ausführungsbeispiel der Erfindung in einem weiteren Verfahrensschritt und
- Fig. 7: eine Bildschirmdarstellung für das Verfahren zur Vollständigkeitsprüfung gemäß dem bevorzugten Ausführungsbeispiel der Erfindung in einem weiteren Verfahrensschritt.
- Fig. 8: eine Bildschirmdarstellung für das Verfahren mit einer wabenförmigen Anordnung der Erfassungsbereiche und einer kurzen, zweiten Wabenzeile.
- Fig. 9: eine Bildschirmdarstellung für das Verfahren mit einer wabenförmigen Anordnung der Erfassungsbereiche und einer langen, zweiten Wabenzeile.
- Fig. 10: eine Bildschirmdarstellung für das Verfahren mit einer wabenförmigen Anordnung der Erfassungsbereiche und einer rechts versetzten zweiten Wabenzeile.
- Fig. 11: eine Bildschirmdarstellung für das Verfahren mit einer wabenförmigen Anordnung der Erfassungsbereiche und einer links versetzten zweiten Wabenzeile.
- Fig. 12: eine Bildschirmdarstellung für das Verfahren mit einer wabenförmigen Anordnung der Erfassungsbereiche und mehreren Auswahlfeldern für Zeilen, Spalten und Rasterart

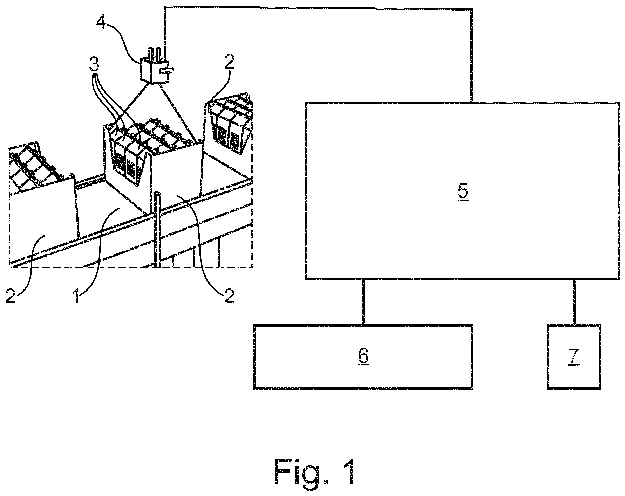

Aus Fig. 1 ist schematisch der Aufbau zur Durchführung eines Verfahrens zur Vollständigkeitsprüfung gemäß einem bevorzugten Ausführungsbeispiel der Erfindung ersichtlich. Auf einem Laufband 1 werden Behälter 2 transportiert, die jeweils vorschriftsmäßig mit zwölf Objekten 3 befüllt sein sollen. Bei den Behältern 2 handelt es sich um offene Kartons, die mit Objekten 3 in Form von Milchtüten befüllt sind.

Mit Hilfe einer 3D-Kamera 4, die über dem Laufband 1 angeordnet ist, kann jeweils ein mit Objekten 3 versehener Behälter 2 optisch erfasst werden. Die 3D-Kamera 4 liefert dabei ein dreidimensionales Bild in Form einer dreidimensionalen Pixel-Matrix, wobei die Pixel-Matrix in einer Dimension Abstandswerte der erfassten Objekte 3 zur 3D-Kamera 4 und in den beiden anderen Dimensionen Ortswerte in jeweiligen Ebenen senkrecht dazu enthält. Dieses von der 3D-Kamera 4 erfasste dreidimensionale Bild wird an eine Anzeigevorrichtung 5 in Form eines Bildschirms übertragen und kann dort, wie im Folgenden im Einzelnen erläutert, angezeigt werden. An die Anzeigevorrichtung 5 sind gemäß der hier beschriebenen bevorzugten Ausgestaltung der Erfindung eine Tastatur 6 und eine Zeigeeinrichtung 7, wie eine Maus, angeschlossen, um einem Nutzer die Möglichkeit zu geben, Eingaben zu machen. Alternativ dazu kann die Anzeigevorrichtung 5 als Touch-Display ausgestaltet sein, was eine Tastatur und eine Maus entbehrlich macht.

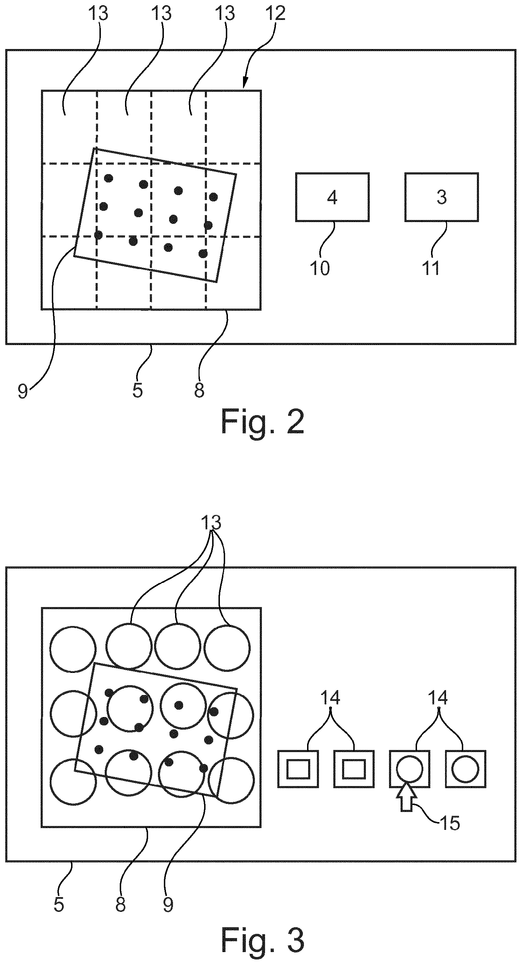

Der Ablauf eines Verfahrens gemäß dem vorliegend beschriebenen bevorzugten Ausführungsbeispiel der Erfindung ist nun wie folgt:
Zuerst wird der Lernmodus des Verfahrens durchgeführt. Dazu wird bei abgeschaltetem Laufband, also bei ruhendem Behälter 2, ein Bild 9 der Objekte 3 und des Behälters 2, die sich unterhalb der 3D-Kamera 4 befinden, erfasst. Das erfasste Bild 9 von den Objekten 3 und dem Behälter 2 wird dann in einem ersten Bildbereich 8 auf der Anzeigevorrichtung 5 dargestellt, wie aus Fig. 2 ersichtlich. Fig. 2 ist auch entnehmbar, dass dem Nutzer des vorliegenden Verfahrens ein Feld 10 zur Angabe der Spalten und ein Feld 11 zur Angabe der Zeilen angezeigt werden. Aufgrund der vorliegenden Eingabe von "4" für die Spalten und "3" für die Zeilen wird automatisch eine Multi-ROI 12 mit insgesamt zwölf ROIs 13, entsprechend den vier Spalten und drei Zeilen, erstellt und im ersten Bildbereich 8 dargestellt. Dabei werden die Spaltenbreiten automatisch derart gewählt, dass sie alle dieselben sind, und auch die Zeilenbreiten werden automatisch so eingestellt, dass sie alle dieselben sind. Das bedeutet, dass gemäß dem vorliegend beschriebenen bevorzugten Ausführungsbeispiel der Erfindung die Multi-ROI symmetrisch in ROIs aufgeteilt wird. Mit anderen Worten: In diesem Schritt werden die ROIs optimal über die Mulit-ROI verteilt.

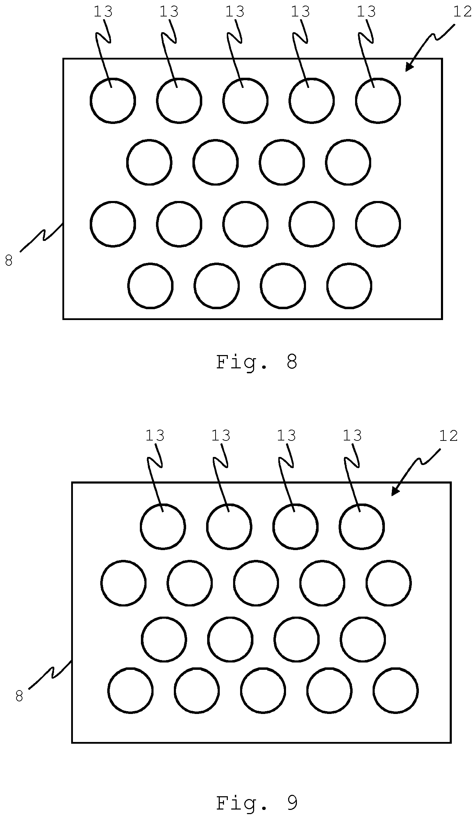

In den Figuren 1 bis 7 wird das erfindungsgemäße Verfahren zunächst anhand einer regulären Struktur, d.h. bei einer Struktur in der für alle Zeilen die Anzahl der Spalten gleich ist, gezeigt. Das erfindungsgemäße Verfahren ist jedoch in gleicher Art und Weise auch auf eine Wabenstruktur gemäß der Figuren 8 bis 12 anwendbar. Darüber ist das Verfahren auch anwendbar für Strukturen mit einer unterschiedlichen Anzahl von Spalten pro Zeile, wobei die ROI ggf. auch unregelmäßig verteilt sein können. Derartige beliebige Strukturen sind dann beispielsweise durch individuelles Verschieben der ROIs 13 erfassbar.

Im nächsten Schritt, der Fig. 3 entnehmbar ist, kann vom Nutzer des Verfahrens die Form der ROIs ausgewählt werden. Angeboten werden ihm dazu in entsprechenden Schaltflächen 14 die Formen eines Quadrats, eines Rechtecks, eines Kreises sowie einer Ellipse. Durch die Auswahl der Kreisform mittels des Mauszeigers 15 erhalten die ROIs 13 im ersten Bildbereich 8 eine Kreisform.

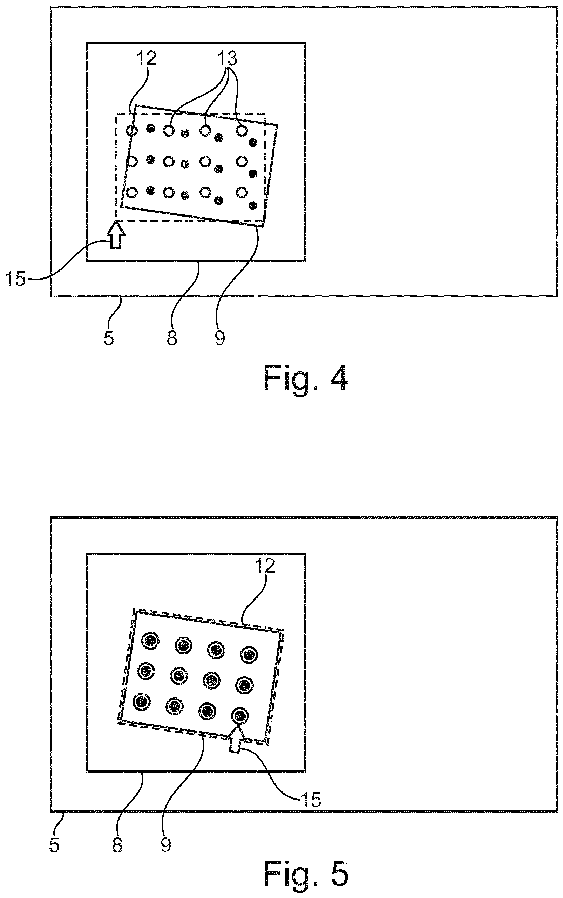

Im nächsten, aus Fig. 4 ersichtlichen Schritt des Verfahrens werden nun die Position und die Größe des Multi-ROIs 12 an das wiedergegebene Bild 9 angepasst. Dies erfolgt mit Hilfe des Mauszeigers 15, mit dem durch Klicken auf das Multi-ROI 12 eine Verschiebung des Multi-ROI 12 sowie eine Änderung seiner Größe möglich ist.

Im darauf folgenden Schritt, der seinerseits aus Fig. 5 ersichtlich ist, wird nun nach der Größe und der Position des Multi-ROI auch die Verdrehung der Multi-ROI 12 an das Bild 9 angepasst. Der Rand des Multi-ROI 12 entspricht damit der Randkontur des Bildes 9, die vom Behälter 2 gebildet wird. Die einzelnen ROIs 13 liegen nun exakt über den zu erfassenden Bereichen der Bilder der Objekte 3 im Behälter 2. Außerdem können mit dem Mauszeiger 15 neben der Größe des Multi-ROIs 12 auch die Größen der einzelnen ROIs 13 verändert werden. Die Größe der einzelnen ROIs 13 wird vorzugsweise derart bemessen, dass diese 80 % der zu erfassenden Bilder der Objekte 3 bedecken.

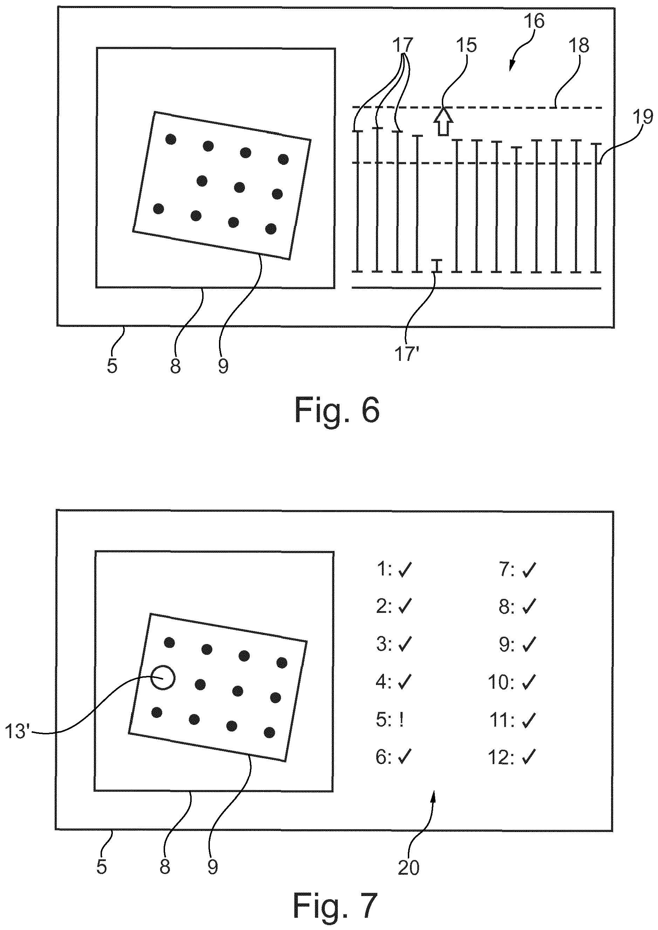

Aus Fig. 6 ist nun ersichtlich, dass in einem zweiten, von dem ersten Bildbereich 8 verschiedenen Bildbereich 16 für jedes ROI 13 von den Abstandswerten abgeleitete Höhenwerte angezeigt werden, und zwar in Form von den Höhenwerten entsprechenden Strecken 17. Senkrecht zu diesen Strecken 17 werden eine obere Grenzlinie 18 für eine obere Grenze für die Höhenwerte und eine untere Grenzlinie 19 für eine untere Grenze für die Höhenwerte angezeigt. Diese Grenzlinien 18, 19 lassen sich mittels des Mauszeigers 15 vom Nutzer nach oben und nach unten verschieben. Auf diese Weise können die Schaltpunkte eingestellt werden, um verschiedene Zustände eines jeweiligen ROIs 13 anzugeben. Liegt ein jeweiliger Höhenwert eines ROIs 13 auf der oberen oder der unteren Grenze bzw. dazwischen, entspricht dies dem Zustand "Gut". Liegt der Höhenwert allerdings über der oberen Grenze, so liegt der Zustand "Überfüllung" vor, und liegt der Höhenwert unter der unteren Grenze, liegt der Zustand "Unterfüllung" vor. Darüber hinaus ist ein Zustand "Ungültig" möglich, nämlich dann, wenn kein verlässlicher Höhenwert erfasst worden ist.

Im vorliegenden Fall, der aus Fig. 6 ersichtlich ist, fehlt ein Objekt in der ganz linken Spalte in der zweiten Reihe. Aus diesem Grund wird für das entsprechende ROI nur ein geringer Höhenwert ermittelt, der sich in einer entsprechend kürzeren Strecke 17' im zweiten Bildbereich 16 niederschlägt. Diese Strecke 17' liegt unterhalb der unteren Grenzlinien 19, so dass hier der Zustand "Unterfüllung" erfasst wird.

Wie schließlich aus Fig. 7 ersichtlich, kann dies im Arbeitsmodus dadurch visualisiert werden, dass das entsprechende ROI 13' im ersten Bildbereich 8 in einer anderen Farbe dargestellt wird. Darüber hinaus ist hier zusätzlich außerhalb des ersten Bildbereichs 8 eine Tabellendarstellung 20 vorgesehen, aus der hervorgeht, dass sich das ROI 13' mit der laufenden Nummer "5" im Zustand "Unterfüllung" befindet.

Figur 8 zeigt eine Multi-ROI 12 für eine wabenförmige Struktur. Die ROIs 13 sind bereits kreisförmig im Bildbereich 8 dargestellt. Die dargestellte Struktur weist vier Zeilen auf, wobei die erst und dritte Zeile jeweils 5 Spalten und die zweite und vierte Zeile jeweils 4 Spalten aufweist. Eine derartige Struktur ist insbesondere für runde Produkte von Vorteil, um eine hohe Packungsdichte zu erreichen. Zur Spezifizierung einer solchen wabenförmigen Struktur reicht es beispielsweise aus, die Anzahl der Zeilen, die maximale Anzahl der Spalten und vorzugsweise eine Eigenschaft der zweiten Zeile anzugeben. Im in Figur 8 dargestellten Fall zeichnet sich die zweite Zeile dadurch aus, dass sie kürzer ist als die erste Zeile. Die Struktur lässt sich dann wie folgt spezifizieren: Zeilen 4, Spalten 5, Rasterart 'kurz'.

Figur 9 zeigt eine zu Figur 8 komplementäre Verteilung der ROIs 13, bei der die zweite Zeile länger ist als die erste. Diese Struktur lässt sich vorzugsweise wie folgt spezifizieren: Zeile 4, Spalten 5, Rasterart 'lang'.

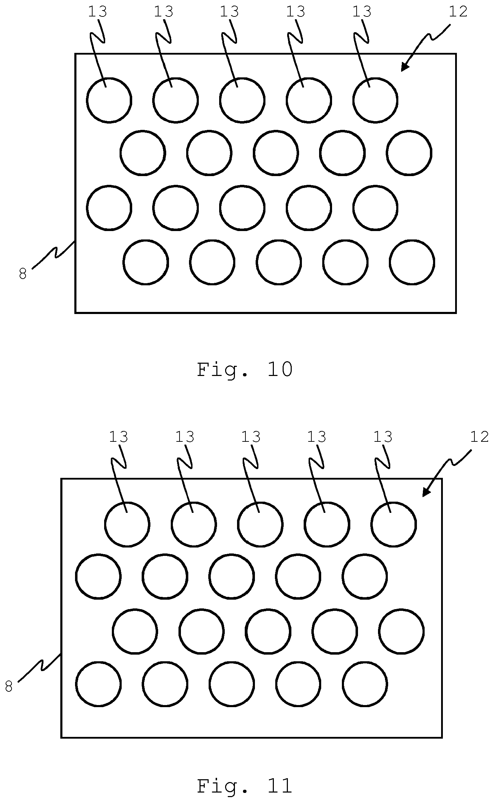

Figur 10 und 11 zeigen weitere Ausgestaltungen, bei der alle Zeile die gleiche Anzahl von Spalten aufweisen, wobei jedoch in Figur 10 die zweite Zeile nach rechts und in Figur 11 nach links versetzt ist. Die Strukturen gemäß Fig. 10 und 11 erhalten dementsprechend die Spezifikation Zeilen 4, Spalten 5, Rasterart 'Rechts' bzw. Rasterart 'Links'.

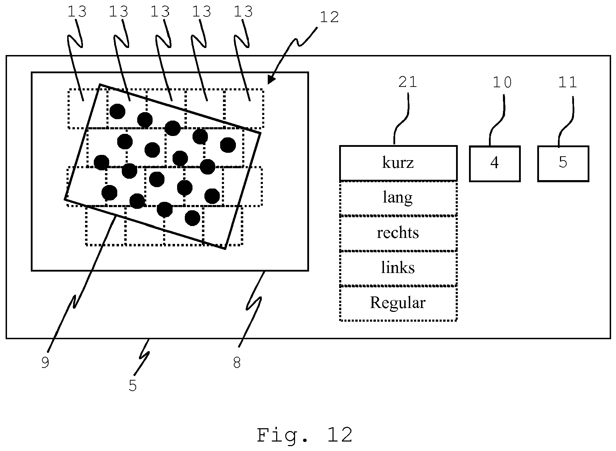

Figur 12 zeigt eine Anzeigevorrichtung analog zu der Anzeigevorrichtung gemäß Figur 2, bei der zusätzlich zu den Feldern für Spalten 10 und Zeilen 11 ein weiteres Feld 21 für die Auswahl der vorliegenden Struktur bzw. Rasterart vorgesehen ist. Als Auswahlmöglichkeiten für die Rasterart sind, wie bereits oben beschrieben: "kurz, lang, rechts, links" und "Regular" für den Fall, das keine Wabenstruktur vorliegt.

Die übrigen Elemente entsprechen den in Figur 2 bereits vorgestellten, wie auch die nachfolgenden Anpassung der ROI analog dem Vorgehen für die reguläre Struktur entsprechend den Ausführungen zu den Figuren 2 bis 7 erfolgt.

Die Auswahlmöglichkeiten der Rasterart sind selbstverständlich nicht auf die gezeigten Beispiele beschränkt. Ebenso ist es denkbar, andere Anordnungen im Auswahlmenu zu hinterlegen. Insbesondere ist es auch denkbar, eine Auswahl "beliebig" vorzusehen, die beispielsweise in weiteren Verfahrensschritten, die Möglichkeit bietet die ROIs individuell zu platzieren.

**Bezugszeichenliste**

| | |
|---|---|
| Laufband | 1 |
| Behälter | 2 |
| Objekte | 3 |
| 3D-Kamera | 4 |
| Anzeigevorrichtung | 5 |
| Tastatur | 6 |
| Zeigeeinrichtung | 7 |
| erster Bildbereich | 8 |
| Bild des Behälters mit den Objekten | 9 |
| Feld für Spalten der Multi-ROI | 10 |
| Feld für Zeilen der Multi-ROI | 11 |
| Multi-ROI | 12 |
| ROIs | 13 |
| Schaltfläche für Form der ROIs | 14 |
| Mauszeiger | 15 |
| zweiter Bildbereich | 16 |
| Strecken | 17 |
| obere Grenzlinie | 18 |
| untere Grenzlinie | 19 |
| Tabellendarstellung | 20 |
| Feld für Rasterart der Multi-ROI | 21 |

## Patentansprüche

1. Verfahren zur Vollständigkeitsprüfung eines mit einer Mehrzahl von Objekten (3) versehenen Behälters (2) mit Hilfe einer 3D-Kamera (4), die ein dreidimensionales Bild (9) der Objekte liefert, und einer Multi-ROI (12), wobei die Multi-ROI (12) eine Mehrzahl von ROIs (13) umfasst, die eine von einem Nutzer einstellbare Form aufweisen sowie innerhalb der Multi-ROI (12) in einer von einem Nutzer einstellbaren Anzahl von Zeilen, Spalten und Rasterart angeordnet sind, mit einem Lernmodus und einem zeitlich nachfolgenden Arbeitsmodus, wobei der Lernmodus folgende Schritte aufweist:
Erfassen eines Bildes (9) der Objekte (3) in Form einer dreidimensionalen Pixel-Matrix mittels der 3D-Kamera, wobei die Pixel-Matrix in einer Dimension Abstandswerte der erfassten Objekte (3) zur 3D-Kamera (4) und in den beiden anderen Dimensionen Ortswerte in jeweiligen Ebenen senkrecht dazu enthält,
Wiedergeben des erfassten Bildes (9) als zweidimensionales Bild mit den Ortswerten in einem ersten Bildbereich (8),
Anzeigen von Eingabefeldern (10, 11, 14) für die Form bzw. die Anzahl der Zeilen, Spalten und Rasterart der ROIs (13),
Anzeigen einer zweidimensionalen Multi-ROI (12) mit einer von dem Nutzer eingegebenen Anzahl von Zeilen, Spalten und Rasterart der ROIs (13) und einer von dem Nutzer eingegebenen Form der ROIs (13) in dem ersten Bildbereich (8),
Anpassen der Größe, der Position und der Verdrehung der Multi-ROI (12) auf wenigstens eine Eingabe des Nutzers hin,
Anpassen der Größe der ROIs (13) auf wenigstens eine Eingabe des Nutzers hin,
Anzeigen von von den Abstandswerten abgeleiteten Höhenwerten für jedes ROI (13) in einem zweiten Bildbereich (16), der von dem ersten Bildbereich (8) verschieden ist,
Anzeigen einer unteren Grenze oder/und einer oberen Grenze für die Höhenwerte in dem zweiten Bildbereich (16),
Anpassen der unteren Grenze oder/und der oberen Grenze für die Höhenwerte auf wenigstens eine Eingabe des Benutzers hin, und
Wechsel in den Arbeitsmodus, wobei der Arbeitsmodus folgenden Schritt aufweist:
Anzeigen eines Zustands einer jeweiligen ROI (13), wobei der Zustand der jeweiligen ROI (13) einer der Zustände "Überfüllung" oder/und "Unterfüllung" und "Gut" ist und wobei der Zustand "Überfüllung" angezeigt wird, wenn der Höhenwert der jeweiligen ROI über der oberen Grenze liegt, der Zustand "Unterfüllung" angezeigt wird, wenn der Höhenwert der jeweiligen ROI unter der unteren Grenze liegt, und der Zustand "Gut" angezeigt wird, wenn der Höhenwert nicht außerhalb einer vorgesehenen Grenze liegt.

2. Verfahren nach Anspruch 1, wobei die von den Abstandswerten abgeleiteten Höhenwerte für jedes ROI (13) in dem zweiten Bildbereich (16) als Strecken (17) mit dem jeweiligen Höhenwert entsprechenden Längen angezeigt werden.

3. Verfahren nach Anspruch 2, wobei die untere Grenze und die obere Grenze für die Höhenwerte als senkrecht zu den Strecken verlaufende Grenzlinien (18, 19) angezeigt werden.

4. Verfahren nach Anspruch 3, wobei die Grenzlinien (18, 19) von dem Nutzer mittels eines Cursors oder einer Fingergeste verschiebbar sind.

5. Verfahren nach einem der vorherigen Ansprüche, wobei im Lernmodus beim Wiedergeben des erfassten Bildes (9) als zweidimensionales Bild mit den Ortswerten in dem ersten Bildbereich (8) die Abstandsdaten codiert als Farben oder Grauwerte angezeigt werden.

6. Verfahren nach einem der vorherigen Ansprüche, wobei im Lernmodus die zweidimensionale Multi-ROI (12) auf der Grundlage der von dem Nutzer eingegebenen Anzahl von Zeilen und Spalten automatisch derart erstellt wird, dass alle Zeilen die selbe Zeilenbreite und alle Spalten die selbe Spaltenbreite aufweisen.

7. Verfahren nach einem der vorherigen Ansprüche, wobei die Form der ROIs (13) für alle ROIs (13) die selbe ist.

8. Verfahren nach einem der vorherigen Ansprüche, wobei im Arbeitsmodus die Zustände der jeweiligen ROIs (13) in dem ersten Bildbereich (8) codiert als Farben oder Grauwerte angezeigt werden.

9. Verfahren nach einem der vorherigen Ansprüche, wobei im Arbeitsmodus die Zustände der jeweiligen ROIs (13) in einem von dem ersten Bildbereich (8) verschiedenen Bildbereich angezeigt werden, vorzugsweise in Form einer Liste.

10. Verfahren nach einem der vorherigen Ansprüche, wobei als 3D-Kamera (4) eine Time Of Flight-Kamera verwendet wird.

## Claims

1. Method for a completeness check of a container (2) holding a plurality of objects (3) by way of a 3D camera (4), which provides a three-dimensional image (9) of the objects, and a multi-ROI (12), wherein the multi-ROI (12) comprises a plurality of ROIs (13) which have a form that is settable by a user and are arranged within the multi-ROI (12) in a number of rows, columns and in a grid type, which are settable by a user, having a learning mode and a temporally subsequent working mode, wherein the learning mode includes the following steps:
capturing an image (9) of the objects (3) in the form of a three-dimensional pixel matrix using the 3D camera, wherein the pixel matrix contains in one dimension distance values of the captured objects (3) from the 3D camera (4) and contains in the two other dimensions location values in respective planes perpendicular thereto,
reproducing the captured image (9) as a two-dimensional image with the location values in a first image region (8),
displaying input fields (10, 11, 14) for the form and the number of the rows, columns and the grid type of the ROIs (13),
displaying a two-dimensional multi-ROI (12) with a number of rows, columns and a grid type of the ROIs (13), which are input by the user, and a form, which is input by the user, of the ROIs (13) in the first image region (8),
adapting the size, the position and the rotation of the multi-ROI (12) to at least one input by the user,
adapting the size of the ROIs (13) to at least one input by the user,
displaying height values, derived from the distance values, for each ROI (13) in a second image region (16), which differs from the first image region (8),
displaying a lower limit and/or an upper limit for the height values in the second image region (16),
adapting the lower limit and/or the upper limit for the height values to at least one input by the user, and
changing to the working mode, wherein the working mode includes the following step:
displaying a state of a respective ROI (13), wherein the state of the respective ROI (13) is one of the states "overfill" and/or "underfill" and "good" and wherein the state "overfill" is displayed when the height value of the respective ROI lies over the upper limit, the state "underfill" is displayed when the height value of the respective ROI lies under the lower limit, and the state "good" is displayed when the height value does not lie outside a designated limit.

2. Method according to Claim 1, wherein the height values, derived from the distance values, for each ROI (13) are displayed in the second image region (16) as sections (17) having lengths that correspond to the respective height value.

3. Method according to Claim 2, wherein the lower limit and the upper limit for the height values are displayed as limit lines (18, 19) extending perpendicularly to the sections.

4. Method according to Claim 3, wherein the limit lines (18, 19) are displaceable by the user by way of a cursor or a finger gesture.

5. Method according to one of the preceding claims, wherein, in the learning mode, during the reproduction of the captured image (9) as a two-dimensional image with the location values in the first image region (8) the distance data are displayed coded as colours or grey levels.

6. Method according to one of the preceding claims, wherein, in the learning mode, the two-dimensional multi-ROI (12) is established automatically on the basis of the number of rows and columns, which are input by the user, such that all rows have the same row width and all columns have the same column width.

7. Method according to one of the preceding claims, wherein the form of the ROIs (13) is the same for all ROIs (13).

8. Method according to one of the preceding claims, wherein, in the working mode, the states of the respective ROIs (13) are displayed in the first image region (8) coded as colours or grey levels.

9. Method according to one of the preceding claims, wherein, in the working mode, the states of the respective ROIs (13) are displayed in an image region that differs from the first image region (8), preferably in the form of a list.

10. Method according to one of the preceding claims, wherein a time-of-flight camera is used as the 3D camera (4) .

## Revendications

1. Procédé de contrôle d'intégralité d'un récipient (2) pourvu d'une pluralité d'objets (3) au moyen d'une caméra 3D (4) fournissant une image tridimensionnelle (9) des objets et d'une région d'intérêt multiple (12), dans lequel la région d'intérêt multiple (12) comprend une pluralité de régions d'intérêt (13) qui présentent une forme réglable par l'utilisateur et qui sont disposées à l'intérieur de la région d'intérêt multiple (12) en un certain nombre de rangées et de colonnes et suivant un type de grille réglables par l'utilisateur, avec un mode d'apprentissage suivi d'un mode de travail, dans lequel le mode d'apprentissage comprend les étapes consistant à :
acquérir une image (9) des objets (3) sous la forme d'une matrice de pixels tridimensionnelle au moyen de la caméra 3D, dans lequel la matrice de pixels contient, dans une dimension, des valeurs de distance des objets détectés (3) par rapport à la caméra 3D (4) et, dans les deux autres dimensions, des valeurs de localisation dans des plans respectifs perpendiculaires à celles-ci,
reproduire l'image (9) acquise sous forme d'image bidimensionnelle comprenant les valeurs de localisation dans une première région d'image (8),
afficher des champs de saisie (10, 11, 14) pour la forme ou le nombre des rangées, des colonnes et du type de grille des régions d'intérêt (13),
afficher une région d'intérêt multiple (12) bidimensionnelle comprenant un certain nombre de rangées, de colonnes et un types de grille, saisis par l'utilisateur, des régions d'intérêt (13), et une forme, saisie par l'utilisateur, des régions d'intérêt (13) dans la première région d'image (8),
adapter la taille, la position et la rotation de la région d'intérêt multiple (12) à au moins une saisie de l'utilisateur,
adapter la taille des régions d'intérêt (13) à au moins une saisie de l'utilisateur,
afficher des valeurs de hauteur, dérivées des valeurs de distance, pour chaque région d'intérêt (13) dans une deuxième région d'image (16) qui est différente de la première région d'image (8),
afficher une limite inférieure et/ou une limite supérieure pour les valeurs de hauteur dans la deuxième région d'image (16),
adapter la limite inférieure et/ou la limite supérieure pour les valeurs de hauteur à au moins une saisie de l'utilisateur, et
passer dans le mode travail, dans lequel le mode de travail comprend l'étape consistant à :
afficher l'état d'une région d'intérêt (13) respective, dans lequel l'état de la région d'intérêt (13) respective est l'un des états "remplissage excessif" ou/et "remplissage insuffisant" et "bon" et dans lequel l'état "remplissage excessif" est affiché lorsque la valeur de hauteur de la région d'intérêt respective est supérieure à la limite supérieure, l'état "remplissage insuffisant" est affiché lorsque la valeur de hauteur de la région d'intérêt respective est inférieure à la limite inférieure et l'état "bon" est affiché lorsque la valeur de hauteur ne dépasse pas une limite prédéfinie.

2. Procédé selon la revendication 1, dans lequel les valeurs de hauteur dérivées des valeurs de distance sont affichées pour chaque région d'intérêt (13) dans la deuxième région d'image (16) sous la forme de trajets (17) dont les longueurs correspondent aux valeurs de hauteur respectives.

3. Procédé selon la revendication 2, dans lequel la limite inférieure et la limite supérieure pour les valeurs de hauteur sont affichées sous forme de lignes de délimitation (18, 19) s'étendant perpendiculairement aux trajets.

4. Procédé selon la revendication 3, dans lequel les lignes de délimitation (18, 19) peuvent être déplacées par l'utilisateur au moyen d'un curseur ou d'un geste du doigt.

5. Procédé selon l'une des revendications précédentes, dans lequel, dans le mode d'apprentissage, lorsque l'image acquise (9) est reproduite sous forme d'image bidimensionnelle comprenant les valeurs de localisation dans la première région d'image (8), les données de distance sont affichées de manière codée sous forme de couleurs ou de niveaux de gris.

6. Procédé selon l'une des revendications précédentes, dans lequel, dans le mode d'apprentissage, la région d'intérêt multiple (12) bidimensionnelle est automatiquement créée sur la base du nombre de lignes et de colonnes saisies par l'utilisateur, de manière à ce que toutes les lignes présentent la même largeur de ligne et que toutes les colonnes présentent la même largeur de colonne.

7. Procédé selon l'une des revendications précédentes, dans lequel la forme des régions d'intérêt (13) est la même pour toutes les régions d'intérêt (13).

8. Procédé selon l'une des revendications précédentes, dans lequel, dans le mode de travail, les états des régions d'intérêt (13) respectives dans la première région d'image (8) sont affichés de manière codée sous forme de couleurs ou de niveaux de gris.

9. Procédé selon l'une des revendications précédentes, dans lequel, dans le mode de travail, les états des régions d'intérêt (13) respectives sont affichés dans une région d'image différente de la première région d'image (8), de préférence sous la forme d'une liste.

10. Procédé selon l'une des revendications précédentes, dans lequel une caméra de temps de vol est utilisée en tant que caméra 3D (4).
